# EUROPEAN PATENT APPLICATION

(11) **EP 3 926 530 A1**
(43) Date of publication of application: **22.12.2021**
(21) Application number: 21179491.2
(22) Date of filing: 15.06.2021
(51) Int. Cl.: G06K 9/00

(54) **TEMPORAL-SPATIAL DIGITAL FINGERPRINTING**

(30) Priority: 16.06.2020 US 202016903323
(71) Applicant: Alitheon, Inc., Bellevue, WA 98004 (US)
(72) Inventor: Ross, David Justin, Bellevue, 98004 (US)
(74) Representative: Dendorfer, Claus

(57) **Abstract**

A series of images of a physical object are captured while the object is changing or moving, and each image processed to form a corresponding digital fingerprint, each individual digital fingerprint including spatial characterizations of points of interest in the corresponding image. Corresponding temporal data is added or linked to each digital fingerprint based on its capture time or position in the series, so that an ensemble of the individual digital fingerprints forms an integrated digital fingerprint of the moving object event that may be stored for use in later identifying that object. The temporal-spatial characteristics of a point of interest may have unlimited dimensions, including but not limited to 3- or 4-dimensional location data. An audio record captured concurrently with the series of images may be analyzed to form a digital fingerprint such as a voiceprint and linked to the integrated digital fingerprint based on the temporal dimension.

## Description

### COPYRIGHT NOTICE

Copyright ^{©} 2019-2020 Alitheon, Inc. A portion of the disclosure of this document contains material which is subject to copyright protection. The copyright owner has no objection to the facsimile reproduction by anyone of the document or the disclosure, as it appears in the Patent Office file or records, but otherwise reserves all copyright rights whatsoever.

### TECHNICAL FIELD

This application pertains to methods, systems and software for generating reference digital fingerprints of time-varying physical objects, based on captured image data and optionally captured audio data, for use in subsequent positive identification of the physical object by comparing target digital fingerprints to the reference digital fingerprints to find a matching record.

### BACKGROUND

U.S. Patent Application Publication No. 2017/0243230 A1, entitled PRESERVING AUTHENTICATION UNDER ITEM CHANGE, disclosed extracting digital fingerprints at different slices in time (often slices widely spaced in time) and adds them to the reference data for a particular object so that as the object ages, undergoes wear-and-tear, grows, or otherwise changes, the database "keeps up with" those changes, i.e., the data evolves to be able to identify or authenticate the item at any time, despite it having changed since it was first scanned/ inducted. The need remains for improvements in digital fingerprinting technology.

### SUMMARY OF THE PRESENT DISCLOSURE

The following is a summary of the present disclosure to provide a basic understanding of some features and context. This summary is not intended to identify key or critical elements of the disclosure or to delineate the scope of the disclosure. Its sole purpose is to present some concepts of the present disclosure in simplified form as a prelude to a more detailed description that is presented later.

Publication No. 2017-0243230 discussed above does not teach or suggest the use of a *temporal component* as part of the digital fingerprint itself. Thus, the digital fingerprints stored about the object over time may have a time sequence to them, but the way the object changes from one acquisition to the next is not in view in that disclosure. To be precise, that change is not used to help identify the object. In the present disclosure, by contrast, *the way* the characteristics of the object change with time, and how that information is used to improve identification of the object, is primarily in view. In other words, ascertaining the way the digital fingerprint at one moment in time morphs into the digital fingerprint at another moment, and using that information for identification purposes is one important teaching of this disclosure.

This disclosure teaches the novel concept of combining spatial and temporal information about an object that changes over time, and from this information forming integrated digital fingerprints for use in identifying that object. Thus, this disclosure teaches, in some embodiments, digitally fingerprinting both temporal and spatial information about an object, linking that information together, storing it, and later using it to identify the object.

This disclosure may be applied to solve multiple problems, several of which are given in use cases below. The general technological problems solved by this disclosure are 1) there are numerous objects that are difficult to statically distinguish from visually similar objects and 2) many current identification systems can be fooled by static images or masks. There are attempts to solve that problem with "liveness testing," that is, with determining that it is a live individual before you, but those attempts are generally "grafted onto" the identification techniques. This disclosure teaches an approach that natively integrates liveness testing into identification; thus, no separate "liveness test" is necessary. ("Liveness Testing" is discussed in more detail below.)

In this disclosure, "identification" generally means the intended result of comparing a digital fingerprint to a reference set (in a data store) of digital fingerprints and finding which object it corresponds to. It should be understood that "identification" is meant to cover *any* way such a reference database is used to acquire information about the object.

The temporal aspects described herein can be added to or applied in conjunction with any form of digital fingerprinting, for example, two-dimensional (i.e. surface-based) digital fingerprinting or three-dimensional depth-based digital fingerprinting.

In one preferred embodiment, the method calls for creating multiple digital fingerprints using existing techniques, sequence them in time, optionally capturing other data simultaneously across time (e.g. a voiceprint as described below) and deriving enhanced recognition capabilities from the way the digital fingerprints change across time. This highlights perhaps the strongest difference between this disclosure and "Preserving Authentication under Item Change" - the publication cited above: in that disclosure, we are striving to *overcome* changes in the object with time; in this disclosure we are *leveraging* those changes to improve identification of the object.

While we describe and claim tracking how a point of interest moves around in time (e.g. on a face or a duffel bag), we also claim linking together *any* characteristics of the object that may change over time. For example, a point of interest may be immovable in space and yet change color with time. Its color as a function of time would therefore be included in the characterization of that point of interest. "Change" may thus be in shape, color, location, or any of a number of other object characteristics. In particular, it does not have to be a change in physical location, though that will be a common use of the taught technology.

The taught system finds points of interest on the object, characterizes them, captures general data about the object (e.g. color or location), and incorporates that into the object's digital fingerprint. This disclosure's teachings add to that process - capturing additional data (e.g. the position of the object, the voiceprint of the person), adding that to the digital fingerprint, and optionally linking those temporally-changing features with the relative and/or global movements or other changes of the points of interest on the object or person. Finally, in a preferred embodiment, we generate data that indicates how the point of interest changes or "morphs" over time. This morphological data is added to the object's digital fingerprint.

This disclosure is not designed to describe any particular approach to digital fingerprinting that takes account of how points of interest change from moment to moment, but rather to be much more general: In one aspect: we claim *any* system that couples coordinate-based features with changes in those features in time. In another aspect: we ALSO claim integrating temporally characterized data that may have no spatial coordinates (e.g. the voiceprint example) to enhance digital fingerprints. See Example 4 below.

This Brief Summary has been provided to describe certain concepts in a simplified form that are further described in more detail in the Detailed Description. The Brief Summary does not limit the scope of the claimed subject matter, but rather the words of the claims themselves determine the scope of the claimed subject matter.

### BRIEF DESCRIPTION OF THE DRAWINGS

Drawing figures are appended to illustrate some aspects of the present disclosure. The drawings are simplified representations of selected systems, methods and aspects; they are not intended to be limiting.
FIG.1 is a simplified block diagram of one example of a system that may be used to implement some aspects of the present disclosure.
FIG. 2 is a simplified flow diagram of one example process to build a digital fingerprint of a time-varying physical object.
FIG. 3 is a simplified flow diagram of one example process to build a temporal-spatial digital fingerprint of an object including an associated audio record.
FIG. 4 is a simplified flow diagram of one example process to illustrate example 1 given below of temporal ordering.
FIG. 5 is a simplified flow diagram of one example process for matching digital fingerprints that include a time dimension in addition to at least one other dimension.
FIG. 6 is a simplified flow diagram of one example process constructing a digital fingerprint that includes a world line to characterize a point of interest in a time-varying object, such as, for example, a video image of a face of a person while they are speaking.

### DETAILED DESCRIPTION OF PREFERRED EMBODIMENTS

Reference will now be made in detail to embodiments of the inventive concept, examples of which are illustrated in the accompanying drawings. The accompanying drawings are not necessarily drawn to scale. In the following detailed description, numerous specific details are set forth to enable a thorough understanding of the inventive concept. It should be understood, however, that persons having ordinary skill in the art may practice the inventive concept without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first machine could be termed a second machine, and, similarly, a second machine could be termed a first machine, without departing from the scope of the inventive concept.

It will be further understood that when an element or layer is referred to as being "on," "coupled to," or "connected to" another element or layer, it can be directly on, directly coupled to or directly connected to the other element or layer, or intervening elements or layers may be present. In contrast, when an element is referred to as being "directly on," "directly coupled to," or "directly connected to" another element or layer, there are no intervening elements or layers present. Like numbers refer to like elements throughout. As used herein, the term "and/or" includes any and all combinations of one or more of the associated listed items.

The terminology used in the description of the inventive concept herein is for the purposes of describing illustrative embodiments only and is not intended to be limiting of the inventive concept. As used in the description of the inventive concept and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed objects. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

### Adding Temporal Components

The patents described in the Background section described purely spatial digital fingerprint systems. There, we find points of interest and characterize them using a SIFT- or SURF-like system. The points of interest are included in the digital fingerprint of an object. In order to match one digital fingerprint to another, say to identify or authenticate a physical object, we require matching multiple points of interest in the corresponding digital fingerprints. To match an individual point of interest to another (in a different or "reference" digital fingerprint), we first require that the two points of interests' feature vectors demonstrate significant similarity (for example, using various distance metrics, being closer than a threshold) and then further require that groups of such points of interest pairs must be in a similar geometric relationship with each other for the match to be called good.

The instant disclosure takes that geometric relationship requirement (for example, a 2-D - for surface digital fingerprinting - or a 3-D - for depth-based digital fingerprinting) and includes the temporal arrangement *and the way such arrangements or other characteristics of points of interest change with time* as integral parts of the digital fingerprint of the object.

This disclosure also teaches coupling the temporal arrangements of the points of interest described above with other features that are not specifically related to the points of interest already existing but that have a strong temporal sequence to them and are coordinated in some way with the changing geometric arrangement of the points of interest. Coupling a voiceprint of a person saying a passphrase with the points of interest on their face that move as they speak is an example.

We call one of these time-changing geometric arrangements a "temporal-spatial" arrangement of points of interest. There are several ways to picture what a "temporal-spatial" digital fingerprint looks like. For simplicity and only as an example consider a two-dimensional surface that changes in time. Images of the surface are taken, say, at some (preferably uniform) spacing in time and the images "stacked" to create a three-dimensional structure. Two of the dimensions of the stacked structure are the two dimensions of the surface, while the third is the image number (representing the change in the image with time). This 3D structure could then be treated as a single object and digitally fingerprinted to form the full digital fingerprint. The "temporal-spatial" features would then be determined by following a point on the surface as it changes in time (i.e. from frame to frame) and characterizing its region in three-space.

We will often use a person saying a password as an example of the teachings of this disclosure. That use is merely illustrative and not meant to be limiting. In one example, a person at induction and again at identification is videoed saying a password or passphrase. It is not *that person,* but *that person saying that password* that provides the raw data for reliable identification/authentication and that provide the "liveness" proof. The examples given below do not focus on what either the positional or the temporal extracted features are. What is important is that both temporal and spatial features are used for identification or authentication and that, in most embodiments, they are linked together.

While we describe videoing a person saying a passphrase, we could just as well be extracting a full surface model (i.e. as described in "Model-based Digital Fingerprinting" U.S. Pat. App. Pub. 2019/0034694) or a depth-based digital fingerprint The best way to look at the spatial and temporal components is NOT that they are unrelated and simply "glued together." Rather, as described in the "stacking of images" mind picture, *where* the points of interest are and *when* they are there are both critical. Thus, we should consider the temporal component as being integrated with the spatial regardless of whether the spatial is 2D, 3D surface, depth-based, or anything else, and regardless of whether the linkage is on a per-point of interest basis or merely another set of changes taking place cotemporaneous with changes in spatial points of interest. To clarify, linkage on a point-of-interest basis occurs, for example, when a particular point of interest is tracked and characterized across time. The way points on a person's face change as they say a passphrase provides an example. Contemporaneous change would, on the other hand, include linking the movements of a person's face with the voiceprint of their voice across time with both being separately characterized but those characterizations temporally linked.

### Examples of Use of Temporal Information

This section discusses different ways the temporal component can be integrated into the digital fingerprint of an object. They are not meant to provide a complete or limiting list of the way this information collected or used. In all cases in view in this disclosure, the object or person being viewed is changing "in real time" and information about the way they change is useful or essential in identifying the object or person. A mere collection of digital fingerprints of the object is not what this disclosure teaches. Rather, that collection must at least:
- have a temporal ordering to it and
- that temporal ordering must provide identifying or distinguishing information about the object and
- must be incorporated into the digital fingerprint of the object and
- must be part of the comparison with stored database references to identify the object.

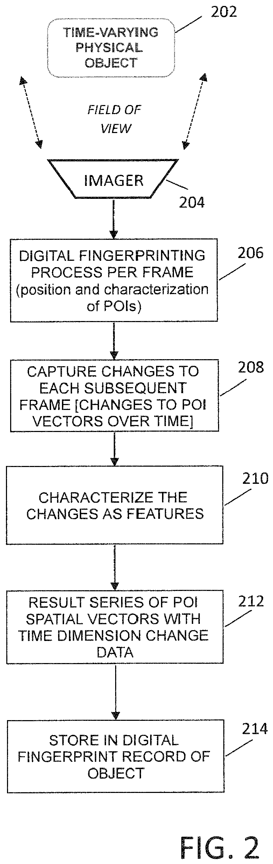

It generally will also be true that the entire period of change in the object is what is being captured. Thus, the "entire period" may be capturing the movements of a person taking a few steps to couple gait analysis with features about the person. It may be coupling the voiceprint of the person saying a phrase with a mapping across time of how points of interest in the person's face change while they are saying the phrase. FIG. 2 is a simplified flow diagram of one process to generate such a digital fingerprint. In this process, an imager 204 captures image data from a physical object 202 located within its field of view. The captured image data is provided to a digital fingerprint process, block 206. This process analyzes each frame of the image data, identifying position and characterizations of points of interest in the frame. Further, the process captures changes to each subsequent frame, i.e. changes to each or at least some of the identified points of interest over time, block 208. The changes are characterized and saved as features, block 210. The resulting series of point of interest spatial vectors with time dimension change data is formed, block 212. Finally, all of that data may be stored in a digital fingerprint record of the physical object 202.

**World lines.** We borrow the concept of a world line from physics. Consider an object existing in 3-space. That is, each point of interest on it has a location in x and y and z. As time passes, that object may move, and thus x, y, and z for each point of interest are functions of time. We can view this as the point of interest occupying a curve in a four-dimensional world. It comes into existence at some time and location (x₀, y₀, z₀, t₀). It then traces a trajectory in 4-space (x(t), y(t), z(t), t). At some point it goes out of existence at (x_{f}, y_{f}, z_{f}, t_{f}). The path it traces between to and t_{f} is the point of interest's "world line". In some embodiments, this disclosure may utilize characterizations of the various points of interests' world lines to identify the object when it is seen again.

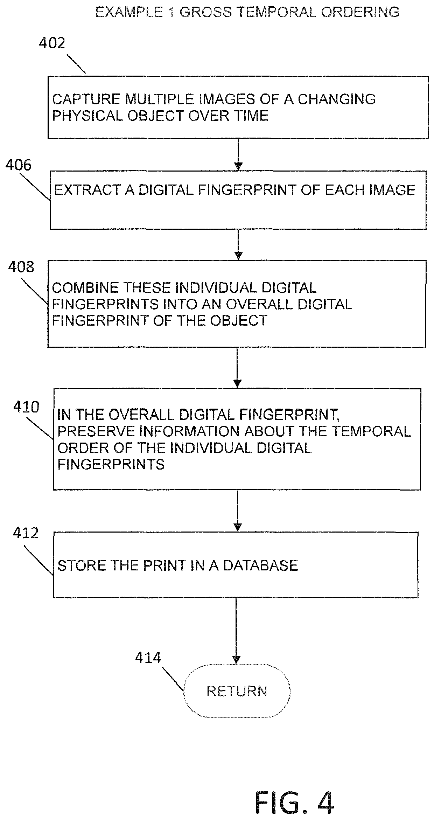

**Example 1: Gross temporal ordering.** The simplest use of the teachings of this disclosure is to take multiple images of the object, extract a digital fingerprint of each image, and combine these individual digital fingerprints into an overall digital fingerprint of the object, where the overall digital fingerprint preserves information about the temporal order of the individual digital fingerprints as part of the overall digital fingerprint of the object. FIG. 4 is a simplified flow diagram of one example process to illustrate gross temporal ordering. In the process of FIG. 4, multiple images of a changing physical object are captured over a time period, block 402. The process extracts a digital fingerprint of each image, block 406. These individual digital fingerprints are combined to form an overall digital fingerprint of the physical object, block 408. The overall digital fingerprint is arranged to preserve information about the temporal order of the individual digital fingerprints as part of the overall digital fingerprint of the physical object, block 410. Finally, this digital fingerprint data may be stored in a database, block 412.

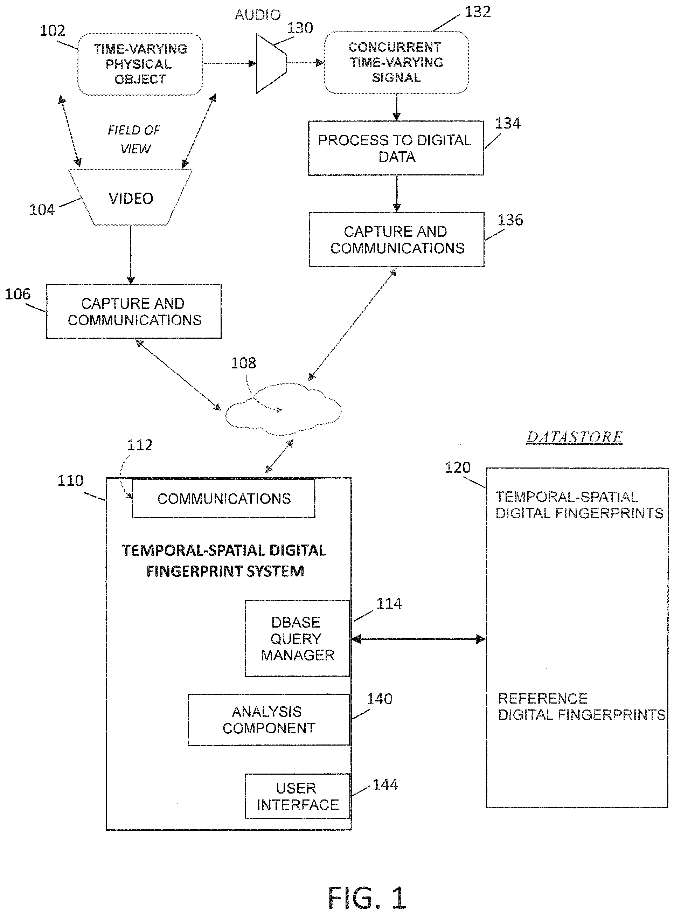

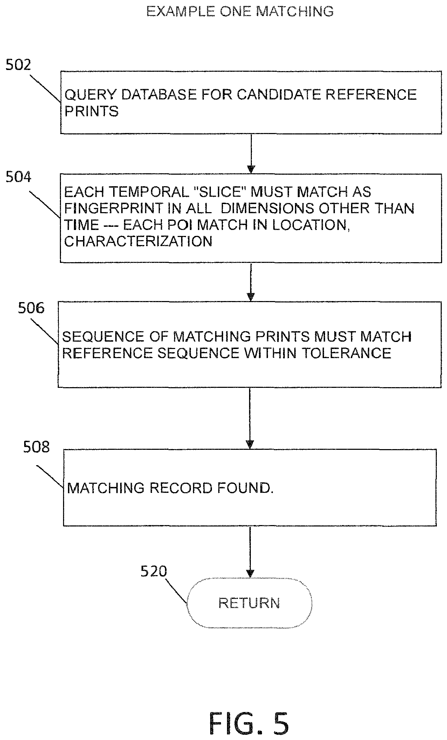

When comparisons with references are performed, the individual parts of the digital fingerprint of the object (that is, these different ordered temporal slices) must match as two-dimensional fingerprints AND be within some tolerance of having a matching sequence order. A digital fingerprint to be tested or compared to previously-stored digital fingerprints we call a **target** digital fingerprint. The previously-stored digital fingerprints are called **reference** digital fingerprints. Thus, we query a database based on the target digital fingerprint to try to find a matching reference digital fingerprint. FIG. 5 is a simplified flow diagram of one example process for matching digital fingerprints that include a time dimension in addition to at least one other dimension. In this illustration, we query a database to find candidate reference digital fingerprints, block 502. (As one example, a database storing reference prints is illustrated in the system of FIG. 1.) Each temporal "slice" (represented by an individual digital fingerprint) must match a reference fingerprint in all dimensions other than time, i.e., each point of interest match in its location and characterization, block 504. In addition, the sequence of the matching digital fingerprints must match the reference sequence within a given tolerance, block 506. If both of these criteria are met, a matching record has been found, block 508. The process terminates at 520.

A mental image of this may be created as follows. Consider again the time sequence of images as a series of frames in a movie presented above. Stack those frames in temporal order to form a 3-Dimensional object. To contribute to a match, a point of interest in the test and reference objects must 1) match closely enough in location, in the characterization vector, *and,* unique to the teachings of this disclosure, in temporal sequence. The correspondence between one temporal slice and the next may be simply a fixed amount of time (say the difference between two frames in a video), be based on the degree of change since the previous image or be based on any other method. The matching between two digital fingerprints may allow (in all dimensions) "rubber sheet" or any other kinds of distortions. Exactly *how* the comparison of one digital fingerprint to another is done, and how the differences are calculated, is outside the scope of this disclosure but many ways suggest themselves to those skillful in the art.

To use the example of a person speaking a password, the person is inducted by being videoed saying a password which takes some period of time. FIG. 1 illustrates one possible system for such applications. In the figure, a time-varying physical object 102 represents any physical object, including a live or inanimate object, that can change in appearance, shape, etc. over a time frame on the order of seconds, as distinguished from gradual wear or aging over weeks or months. The object, which may be a person's face, for example, is located within a field of view of a video capture device 104. The video capture device 104 captures a series of frames while the object 102 is moving. Thus, the video capture device 104 is arranged with a frame speed, magnification, resolution, etc. appropriate to the subject matter. For many applications, including facial capture, an ordinary smartphone video camera will suffice. Each frame of the video would be digitally fingerprinted and stored as part of the digital fingerprint of the overall sequence. Each frame digital fingerprint preferably includes a temporal coordinate, for example, a timestamp or frame sequence number. The video capture data may be assembled at a capture and communications module 106. The module 106 is arranged for data communications over a network, for example, the internet, represented by cloud 108.

A temporal-spatial digital fingerprint system 110, for example, implemented on a computer server, includes a communication module 112 suitable for data communications over the network 108. The system 110 receives the video data via 108 and processes it to form a digital fingerprint of the object 102. Again, in a preferred embodiment, the digital fingerprint of the object would include digital fingerprints of each individual frame of the video capture data. The system 110 further comprises or is coupled to a database query manager component 114. The query manager 114 in turn is coupled to a datastore 120 to store digital fingerprint records, or records that include or link to digital fingerprints, including temporal-spatial digital fingerprints as described herein. The digital fingerprints can be formed in various ways including, for example, a process such as that described with regard to FIG. 2.

At identification, the same process is followed. In comparing the two overall digital fingerprints, each image would again be digitally fingerprinted and compared in order. The comparison need not be one-to-one: a particular image's digital fingerprint may better compare to a digital fingerprint somewhat earlier or later in the sequence, but the order should be more or less preserved across the individual digital fingerprints. If the same word is spoken more slowly, say, at identification, the digital fingerprints sequences might match quite well but their timestamps will not (because of the differences in elapsed time from start of word to end of word). This sequence matching where exact time spacing fails to match is an example of an allowed "rubber sheet" distortion, in this case in the temporal domain.

**Example 2: Depth-based digital fingerprinting of the stacked images.** This differs from the previous example by directly (at least in principle) fingerprinting the stack of images with the temporal order being the equivalent of "depth" in a three dimensional digital fingerprint. While it is unlikely anyone would really form such a stack and then fingerprint it this way, the picture is presented as a mental aid even if the result would be accomplished in a different manner.

This is where the concept of world lines becomes important. Consider a particular point of interest in an object. It may suddenly come into existence (such as when that part of the object become visible to the camera), move around, and eventually go out of existence. It is possible to extract features of the resulting world line (say its curvature at any particular time) and use them (along with other features of the point of interest itself) to characterize that point of interest and compare it with others. While not limiting the information that can be characterized, it is possible to characterize the world line by the physical and temporal components of points along the time, by the way they change, by its world line's direction or curvature along its length, and by many other ways.

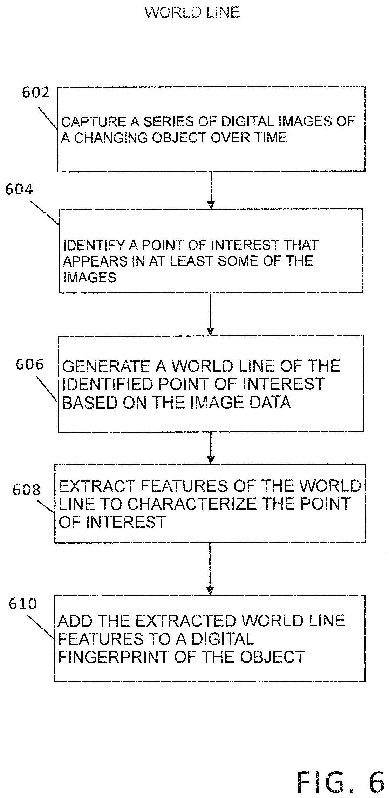

FIG. 6 is a simplified flow diagram of one example process constructing a digital fingerprint that includes a world line to characterize a point of interest in a time-varying object, such as, for example, a video image of a face of a person while they are speaking. This process calls for capturing a series of digital images of a changing object over time, block 602. Next is identifying a point of interest that appears in at least some of the captured images, block 604. Next is generating a world line of the identified point of interest based on the image data, block 606. The process then extracts features of the world line to characterize the point of interest, block 608. Finally, the process adds the extracted world line features to a digital fingerprint of the object, block 610.

In this conception, the world line may be used to characterize the points of interest along its path, whether continuously or discretely. Two world lines may be compared in many ways, but comparison of the characterizations of points along the line and comparison of the characterization of the location and shape of the world line along its path are among the possibilities.

**Example 3: Temporally-distorted stacked digital fingerprints.** This is similar to, but distinct from the two previous examples. It differs from the first example in that instead of each image frame becoming an ordered digital fingerprint component of the object's complete fingerprint (with that ordering being indicative that the timestamps of the points of interest in that slice are all the same up to some tolerance), in this example each point of interest evolves separately or their time sequences are only loosely linked. The difference can be pictured using the spoken password example: a person saying a password might crease his forehead at slightly different times (compared to his mouth movements) each time the sequence is captured. That slight difference in temporal sequencing is likely to have little effect on achieving a practical match of the full digital fingerprint. In this example, that difference in time at points of interest on the forehead would be treated differently from differences in time on, say, the lips of the person, though they may (or may not) be required to occur at roughly the same time. In effect, example 3 (as distinct from example 1) means that the points of interest can be compared at least somewhat independently instead of all at the same time. The difference between this example and example 2 is where the variation comes from. Here, instead of comparing a slice with a slice, we compare all (or a subset of all) points of interest separately.

**Example 4: Temporal content not directly associated with points of interest.** Also in view in the teachings of this disclosure is the use of temporally-sequenced information that is captured and analyzed separately from the visual data but is temporally linked to that positional data. Thus, a voiceprint of the person speaking the password may be captured and the features extracted from that voiceprint linked (by, say, using the same or approximately the same timestamp) with points of interest associated with the position or shape of the face. The voiceprint can be analyzed to produce time-sequenced features that are added to the image-based features to create the digital fingerprint of the object.

Referring again to Figure 1, it shows an audio capture device 130, for example, a microphone, arranged to capture sound from the time-varying physical object 102, which again may be a person's face. The audio capture device 130 generates a time-varying signal 132, representative of the sound captured from the physical object while the video capture 104 is operating. The time-varying sound signal may be processed into digital form, block 134, and the digital sound data communicated by a component 136 to the temporal-spatial digital fingerprint system 110 via network 108. The digital sound data includes a temporal coordinate. The temporal-spatial digital fingerprint system may further process the sound data, and add resulting voiceprint data to the visual (spatial) digital fingerprint of the physical object.

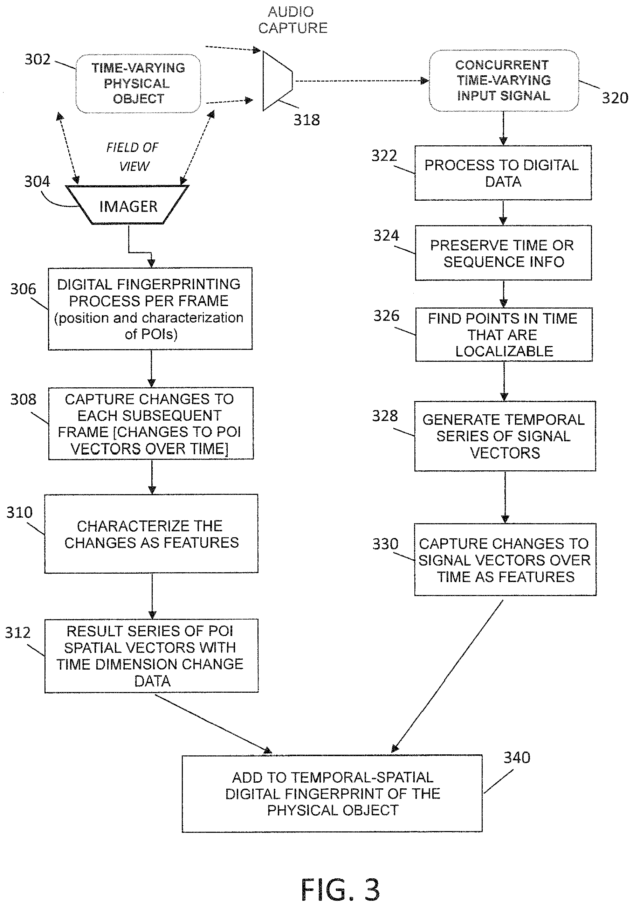

Again, consider the example of a person speaking a password. We can add to the points of interest derived from spatial features additional features from the voiceprint of the person saying the password. Unlike in the previous examples, there is no spatial correspondence of the points of interest in the person's face with the points of interest in the voiceprint. Rather, there is a *temporal linking* of the person's movements (and the movements and other changes of each spatial point of interest) with the features of the voice print. Such a process is illustrated in FIG. 3.

FIG. 3 is a simplified flow diagram of one example process to build a temporal-spatial digital fingerprint of an object including an associated audio record. In this example, image data is captured from a time-varying physical object 302 while the object is moving or changing in a manner visible to an image capture device or imager 304. The image provides image data, for example, video data, to a digital fingerprinting process, block 306 which processes each frame much like a still image. It preferably locates and records in the digital fingerprint position and characterization data for identified points of interest. The process further captures changes to each subsequent frame, that is, changes to the identified points of interest, process block 308. In one embodiment, the points of interest changes may be characterized as features or feature vectors, block 310. The resulting series of points of interest spatial vectors with time dimension change data, formed at block 312, are then added to the temporal-spatial digital fingerprint of the physical object, block 340.

Concurrently with the image capture at 304, an audio capture device 318 captures sound emitted by the physical object 302. This is used to create a concurrent time-varying input signal 320 that is responsive to the emitted sound. That signal is input to a process to form digital data, block 322. Time or sequence (temporal) information is preserved in the digital sound data, block 324. The process further identifies points in the sound data that are localizable, block 326. Based on the identified points, the process may generate a temporal series of signal vectors, block 328. The resulting series of signal vectors are analyzed, block 330, to capture changes over time, and store the changes as features. The resulting data is added to the temporal-spatial digital fingerprint of the physical object at block 340.

In this disclosure, in addition to leveraging how digital fingerprints change with time as features, we preferably treat the time dimension as just another dimension. In a pending unpublished application (Ref. 0524), we extended the concept of point of interest location and characterization from the standard two dimensions to three. Here, in some embodiments, we include extending it to four or more dimensions, while treating all of the dimensions as comparable. For example, assume capture of a sequence of sounds, say a person speaking a particular phrase in a language such as Xhosa that has clicks in it. What the person is saying might be characterized across time as frequency (one dimension) and intensity. This data could be characterized by finding points in the frequency/intensity space that are localizable and tracking their trajectories across time. One could also do something else: find places in time where frequency and intensity change very quickly. These points where the second derivative of the signal IN TIME is very high, is "localizable" in the same sense a white dot on a black background is localizable in two dimensions. This would, for the Xhosa speaker, make the clicks "points of interest" and their order and spacing the same sort of thing as the geometric relationship among the usual 2D points of interest.

To illustrate, imagine a 2D surface that is black with irregularly shaped and placed white dots. The coordinates of one such dot might be at x=4, y=12. The Laplacian would be quite high at that place and a point of interest would be located there, to be characterized by the surrounding image features. Now imagine replacing y with t, the temporal coordinate. Nothing would change as far as locating or characterizing the point of interest except that the data would continuous across time as opposed to across the y direction.

### Additional Considerations

**The spoken passphrase examples.** Here is a more detailed description of the spoken passphrase example referred to several times above. I want to again stress that this is merely one example of how the teachings of this disclosure can be used. I use it because it nicely illustrates multiple concepts in this disclosure, but it must always be kept in mind that this disclosure has much wider range of use than just identifying people and much wider sources of changing information for the digital fingerprint than surface images and a voiceprint.

A person approaches a kiosk for entry into a secure space. He is imaged, and digital fingerprints are captured during the period of identification. During that period the kiosk asks him to say a particular phrase. This phrase, or at least its components, were previously used when the reference set of digital fingerprints was created. If the passphrase is "Speak friend and enter", the system records his voiceprint while he is speaking. It also records, in synch, the movement of points of interest in his face. How the feature vectors of two points of interest match at different times, how various points of interest fit into particular (and potentially changing) geometric arrangements, and how those points move with time are coupled temporally to the voice print and its points of interest and their features and everything integrated into the digital fingerprint of the object. When it comes to identifying the person, we use all or parts of the feature matching of the points of interest, their geometric arrangements, their *changing* geometric arrangements in response to (in this case) saying the passphrase, the voiceprint, and the temporal matching of the voiceprint with the movement of the points of interest on the person's face for identification purposes.

### Liveness testing

Today, "liveness" testing and gait analysis (to pick two examples out of many) are done as a separate pass from any other identification of the person. The purpose of liveness testing is to ensure the identification system is not fooled by a photograph or a mask resembling the person and so the person may be asked to face to the left or to smile and then be reidentified in the new position or with the next expression. The commands are pseudo-random, making it more difficult for a would-be spoofer to fool the system.

Currently, liveness testing is a separate performance of the system from identification. In other words, standard identification techniques determine that what the system sees is an image that looks very much like the person it is supposed to represent. Liveness testing is then used as a second step to determine whether there is an actual person present (rather than a photograph or a mask). Such liveness testing may involve asking the person to say or do something unpredictable, or it may simple look for subtle movements of a person's face that inevitably take place during the identification phase involving a live person but would be extremely hard to spoof with some kind of recording or with a mask.

The present disclosure extends far beyond liveness testing and certainly should not be limited to it, but liveness testing is a major use for such geo-temporal digital fingerprinting as it taught here. A major novelty of the taught system is that liveness testing is directly integrated in the taught approach and is not an "add-on" as with current systems. Thus, a person may be inducted saying several different phrases and a unitary digital fingerprint of, say, positional and voiceprint features extracted and stored. Later, at the authentication phase, the person would be asked to say one of the inducted phrases. While this asking the person to say an unpredictable phrase resembles asking them to, for example, turn their head in a particular direction or smile, it is easy to see the differences: in the teachings of this disclosure the features that show that a person is alive are an integral part of the digital fingerprint which is also used to identify them. Also, it is far harder to spoof a person saying an unpredictable phrase than to spoof a person changing a static expression. This is true for several reasons, but it is sufficient to point out that some of those features (such as a voiceprint) are not visual at all and hence present an additional spoofing difficulty, as does the way the different parts of the digital fingerprint are linked. To capture and use the kinds of digital fingerprints taught here, a spoofer would have to capture the person saying all possible phrases and capture them with both a camera and a microphone that duplicates what will be found at the authentication station.

Liveness testing as taught in this disclosure couples requiring the person to do something unusual, capturing sequential data related to that action, associating that data with sequential (and temporally synchronous) data on the movement of the object (such as change of expression when saying a passphrase) and using all of that as identifying information indicating that what is before the system is a live person with a particular identity.

In more detail, consider the example of the person speaking a passphrase. The digital fingerprint of his facial positions and the coupled voice print features can be used for both identification and for liveness testing. Liveness testing hinges on requiring a person to do something that is easy for the person to do but difficult for a "spoofer" to anticipate. It may be changing the passphrase among a large selection that were used when the person was inducted. It may be richer than that. The following is also in view in this disclosure. A person is inducted saying, "The capital of Nigeria is Abuja" but at identification is asked to say, "Abuja is the capital of Nigeria". The pieces are all there, but even a spoofer who recorded the person saying the original phrase would be hard pressed to switch it around in real time, while a person would have little difficulty in doing so. The reordered components used for identification can come also from multiple different phrases captured at induction and assembled into a passphrase at identification time.

### Definitions

For the purposes of this disclosure, we make the following definitions. They are not meant to completely specify the topics but rather to clarify the differences among three different but related things.

**Dimensionality** refers to the number of independent coordinates that are **necessary to characterize space-time locations** on or in the object being digitally fingerprinted. It does *not* refer to the dimensions of any resulting feature vector that is used to characterize the object or any part of it. That dimensionality is typically much higher. Dimensionality therefore typically refers to one, two, or three spatial coordinates and zero or one temporal coordinate. A digital fingerprint extracted across time from a moving surface would have two spatial dimensions (on the surface of the object) and one of time, for example.

**Two-dimensional digital fingerprinting.** The object being fingerprinted is viewed as though it were a flat surface and all the extracted surface characteristics are determined as though from a flat surface. An example is the location of a point of interest in a single-camera image by localizing regions of roughly circular high contrast. Regardless of how the digital fingerprints are extracted, and regardless of the actual shape of the item, a digital fingerprint is two-dimensional for the purpose of this disclosure when two dimensions is sufficient to locate salient features. A digital fingerprint does not become three-dimensional or four-dimensional just because a third or fourth coordinate appears in the characterization of, say, the location of points on a surface, since a surface is inherently two-dimensional even if embedded in a higher-dimensional space

What is important is *not* how many dimensions are *used to* characterize a surface location but instead the minimum number of dimensions *required* to uniquely identify each point. To illustrate: consider a curved surface, such as the surface of a sphere. It is easy to characterize the surface in a three-dimensional Euclidean coordinate system but that does not change the fact that the surface is intrinsically two-dimensional and *can* be characterized with two numbers (such as latitude and longitude).

Two-dimensional digital fingerprinting may be used, therefore, to characterize the surface features of a three-dimensional object. Even though the object may be strongly three-dimensional, and even though three coordinates may be used to locate each point on the surface, a surface is inherently two-dimensional and *could be* represented by two coordinates. The dimensionality of such a surface is therefore considered "two-dimensional" regardless of how it is characterized.

**Three-dimensional digital fingerprinting.** A digital fingerprint becomes three dimensional through adding another *required* dimension to the location of points of interest or other features of the object. That added dimension may be a third spatial dimension (e.g. locating points *within* the object) or it may be a temporal one (such as mapping the way the surface of the object changes with time). A face surface that changes with time is thus intrinsically three-dimensional (two spatial coordinates on the surface and one of time).

**Four-dimensional digital fingerprinting.** The extension of the above concepts to four dimensions is straightforward: we add a temporal coordinate or temporal sequence number to the characterization of an already intrinsically three-dimensional digital fingerprint. In the case above of a surface changing over time, time (or temporal sequence) became the third dimension. Here it becomes the fourth dimension. In one embodiment, we extract points of interest characterized both in space and across time (i.e. as they change). We use the ensemble of those points of interest characterizations as the 4D digital fingerprint of the object. We compare a newly-captured digital fingerprint with the references to authenticate that 1) the 3D characterizations in the ensemble match and 2) the temporal sequencing of the characterizations also match.

**N-dimensional digital fingerprinting.** In general, the number of dimensions used in point of interest location and characterization is unlimited. It depends on whatever data is being digitally fingerprinted. If we are capturing 10 characteristics or features about each point on a 3D object, we have 13 dimensions to work with. If we capture that across time, we have 14. Thus, digital fingerprinting is not merely something that happens in physical space. As one example, a point of interest inside an object (three dimensions) may change its intensity as well as its position across time (thus three dimensions for position, one for intensity, and one for time, for a total of five). If it is captured in color, there may be three intensity values (e.g. R, G, and B) that change with time, giving a total of seven dimensions.

**Temporal coordinates.** In some embodiments, we may add a characterization to something in the digital fingerprint (for example to a point of interest) that can be used to gauge the way that that point of interest moves over time. We might have, for example, a continuous capture of image information tagged with the time at which the images were captured. (Digital image capture is not literally *continuous*; rather, it captures discrete frames continuously during a capture time period or event). Each frame timestamp can then become a temporal coordinate assigned to, for example, each point of interest in the corresponding digital fingerprint at that time.

On the other hand, in some embodiments, we may not care about how fast or slow a change in something takes place, but only *the order* in which the item changes. A person might, for example, speak a passphrase at different speeds at different times but we only care how the facial movements and the voiceprint are linked and the order in which they occur, but do not care about the absolute time. A sequence number serves that purpose. Both the use of a temporal measurement (*January 18, 2021 17:31:6.23141*) and the use of sequence numbers (frame 263 out of a sequence of 1000 frames, with 263 coming after 262 and before 264 but not caring how long after or before) are in view in the teaching of this disclosure.

### Digital Fingerprinting in General

"Digital fingerprinting" refers to the creation and use of digital records (digital fingerprints) derived from properties of a physical object, which digital records are typically stored in a database. Digital fingerprints maybe used to reliably and unambiguously identify or authenticate corresponding physical objects, track them through supply chains, record their provenance and changes over time, and for many other uses and applications.

In more detail, digital fingerprints typically include information, preferably in the form of numbers or "feature vectors," that describes features that appear at particular locations, called points of interest, of a two-dimensional (2-D) or three-dimensional (3-D) object. In the case of a 2-D object, the points of interest are preferably on a surface of the corresponding object; in the 3-D case, the points of interest may be on the surface or in the interior of the object. In some applications, an object "feature template" may be used to define locations or regions of interest for a class of objects. The digital fingerprints may be derived or generated from digital data of the object which may be, for example, image data.

While the data from which digital fingerprints are derived is often images, a digital fingerprint may contain digital representations of any data derived from or associated with the object. For example, digital fingerprint data may be derived from an audio file. That audio file in turn may be associated or linked in a database to an object. Thus, in general, a digital fingerprint may be derived from a first object directly, or it may be derived from a different object (or file) linked to the first object, or a combination of the two (or more) sources. In the audio example, the audio file may be a recording of a person speaking a particular phrase as detailed above. The digital fingerprint of the audio recording may be stored as part of a digital fingerprint of the person speaking. The digital fingerprint (of the person) may be used as part of a system and method to later identify or authenticate that person, based on their speaking the same phrase, in combination with other sources.

In the context of this description, a digital fingerprint is a digital representation of the physical object. It can be captured from features of the surface, the internals, the progression of the object in time, and any other repeatable way that creates a digital fingerprint that can be uniquely and securely assigned to the particular digital object. The physical object may be a living object.

Returning to the 2-D and 3-D object examples mentioned above, feature extraction or feature detection may be used to characterize points of interest. In an embodiment, this may be done in various ways. Two examples include Scale-Invariant Feature Transform (or SIFT) and Speeded Up Robust features (or SURF). Both are described in the literature. For example: "Feature detection and matching are used in image registration, object tracking, object retrieval etc. There are number of approaches used to detect and matching of features as SIFT (Scale Invariant Feature Transform), SURF (Speeded up Robust Feature), FAST, ORB etc. SIFT and SURF are most useful approaches to detect and matching of features because of it is invariant to scale, rotate, translation, illumination, and blur." MISTRY, Darshana et al., Comparison of Feature Detection and Matching Approaches: SIFT and SURF, GRD Journals-Global Research and Development Journal for Engineering | Volume 2 | Issue 4 | March 2017.

In some embodiments, digital fingerprint features may be matched, for example, based on finding a minimum threshold distance. Distances can be found using Euclidean distance, Manhattan distance, etc. If distances of two points are less than a prescribed minimum threshold distance, those key points may be known as matching pairs. Matching a digital fingerprint may comprise assessing a number of matching pairs, their locations or distance and other characteristics. Many points may be assessed to calculate a likelihood of a match, since, generally, a perfect match will not be found. In some applications an "feature template" may be used to define locations or regions of interest for a class of objects.

In an embodiment, features may be used to represent information derived from a digital image in a machine-readable and useful way. Features may be point, line, edges, and blob of an image etc. There are areas as image registration, object tracking, and object retrieval etc. that require a system or processor to detect and match correct features. Therefore, it may be desirable to find features in ways that are invariant to rotation, scale, translation, illumination, noisy and blurry images. The search of interest points from one object image to corresponding images can be very challenging work. The search may preferably be done such that same physical interest points can be found in different views. Once located, points of interest and their respective characteristics may be aggregated to form the digital fingerprint (generally also including 2-D or 3-D location parameters).

### Scanning

In this application, the term "scan" is used in the broadest sense, referring to any and all means for capturing an image or set of images, which may be in digital form or transformed into digital form. Images may, for example, be two dimensional, three dimensional, or in the form of a video. Thus a "scan" may refer to an image (or digital data that defines an image) captured by an imager, scanner, a camera, a specially adapted sensor or sensor array (such as a CCD array), a microscope, a smartphone camera, a video camera, an x-ray machine, a sonar, an ultrasound machine, a microphone (or other instruments for converting sound waves into electrical energy variations), etc. Broadly, any device that can sense and capture either electromagnetic radiation or mechanical wave that has traveled through an object or reflected off an object or any other means to capture surface or internal structure of an object is a candidate to create a "scan" of an object.

Various means to extract "fingerprints" or features from an object may be used; for example, through sound, physical structure, chemical composition, or many others. The remainder of this application will use terms like "image" but when doing so, the broader uses of this technology should be implied. In other words, alternative means to extract "fingerprints" or features from an object should be considered equivalents within the scope of this disclosure. Similarly, terms such as "scanner" and "scanning equipment" herein may be used in a broad sense to refer to any equipment capable of carrying out "scans" as defined above, or to equipment that carries out "scans" as defined above as part of their function. Attestable trusted scanners should be used to provide images for digital fingerprint creation. Scanner may be a single device or a multitude of devices working to enforce policy and procedures.

### Authentication

More information about digital fingerprinting can be found in various disclosures and publications assigned to Alitheon, Inc. including, for example, the following: DIGITAL FINGERPRINTING, U.S. Pat. No. 8,6109,762; OBJECT IDENTIFICATION AND INVENTORY MANAGEMENT, U.S. Pat. No. 9,152,862; DIGITAL FINGERPRINTING OBJECT AUTHENTICATION AND ANTI-COUNTERFEITING SYSTEM, U.S. Pat. No. 9,443,298; PERSONAL HISTORY IN TRACK AND TRACE SYSTEM, U.S. Pat. No. 10,037,537; PRESERVING AUTHENTICATION UNDER ITEM CHANGE, U.S. Pat. App. Pub. No. 2017-0243230 A1. Each of these patents and publications is hereby incorporated by this reference.

The foregoing description, for purpose of explanation, has been described with reference to specific embodiments. However, the illustrative discussions above are not intended to be exhaustive or to limit the disclosure to the precise forms disclosed. Many modifications and variations are possible in view of the above teachings. The embodiments were chosen and described in order to best explain the principles of the disclosure and its practical applications, to thereby enable others skilled in the art to best utilize the disclosure and various embodiments with various modifications as are suited to the particular use contemplated.

The system and method disclosed herein may be implemented via one or more components, systems, servers, appliances, other subcomponents, or distributed between such elements. When implemented as a system, such systems may include an/or involve, inter alia, components such as software modules, general-purpose CPU, RAM, etc. found in general-purpose computers. In implementations where the innovations reside on a server, such a server may include or involve components such as CPU, RAM, etc., such as those found in general-purpose computers. Additionally, the system and method herein may be achieved via implementations with disparate or entirely different software, hardware and/or firmware components, beyond that set forth above. With regard to such other components (e.g., software, processing components, etc.) and/or computer-readable media associated with or embodying the present inventions, for example, aspects of the innovations herein may be implemented consistent with numerous general purpose or special purpose computing systems or configurations. Various exemplary computing systems, environments, and/or configurations that may be suitable for use with the innovations herein may include, but are not limited to: software or other components within or embodied on personal computers, servers or server computing devices such as routing/connectivity components, hand-held or laptop devices, multiprocessor systems, microprocessor-based systems, set top boxes, consumer electronic devices, network PCs, other existing computer platforms, distributed computing environments that include one or more of the above systems or devices, etc.

In some instances, aspects of the system and method may be achieved via or performed by logic and/or logic instructions including program modules, executed in association with such components or circuitry, for example. In general, program modules may include routines, programs, objects, components, data structures, etc. that perform particular tasks or implement particular instructions herein. The inventions may also be practiced in the context of distributed software, computer, or circuit settings where circuitry is connected via communication buses, circuitry, or links. In distributed settings, control/instructions may occur from both local and remote computer storage media including memory storage devices.

The software, circuitry and components herein may also include and/or utilize one or more type of computer readable media. Computer readable media can be any available media that is resident on, associable with, or can be accessed by such circuits and/or computing components. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical storage, magnetic tape, magnetic disk storage or other magnetic storage devices, or any other medium which can be used to store the desired information and can accessed by computing component. Communication media may comprise computer readable instructions, data structures, program modules and/or other components. Further, communication media may include wired media such as a wired network or direct-wired connection, however no media of any such type herein includes transitory media. Combinations of the any of the above are also included within the scope of computer readable media.

In the present description, the terms component, module, device, etc. may refer to any type of logical or functional software elements, circuits, blocks, and/or processes that may be implemented in a variety of ways. For example, the functions of various circuits and/or blocks can be combined with one another into any other number of modules. Each module may even be implemented as a software program stored on a tangible memory (e.g., random access memory, read only memory, CD-ROM memory, hard disk drive, etc.) to be read by a central processing unit to implement the functions of the innovations herein. Or, the modules can comprise programming instructions transmitted to a general-purpose computer or to processing/graphics hardware via a transmission carrier wave. Also, the modules can be implemented as hardware logic circuitry implementing the functions encompassed by the innovations herein. Finally, the modules can be implemented using special purpose instructions (SIMD instructions), field programmable logic arrays or any mix thereof which provides the desired levels of performance and cost.

As disclosed herein, features consistent with the disclosure may be implemented via computer-hardware, software and/or firmware. For example, the systems and methods disclosed herein may be embodied in various forms including, for example, a data processor, such as a computer that also includes a database, digital electronic circuitry, firmware, software, or in combinations of them. Further, while some of the disclosed implementations describe specific hardware components, systems and methods consistent with the innovations herein may be implemented with any combination of hardware, software and/or firmware. Moreover, the above-noted features and other aspects and principles of the innovations herein may be implemented in various environments. Such environments and related applications may be specially constructed for performing the various routines, processes and/or operations according to the invention or they may include a general-purpose computer or computing platform selectively activated or reconfigured by code to provide the necessary functionality. The processes disclosed herein are not inherently related to any particular computer, network, architecture, environment, or other apparatus, and may be implemented by a suitable combination of hardware, software, and/or firmware. For example, various general-purpose machines may be used with programs written in accordance with teachings of the invention, or it may be more convenient to construct a specialized apparatus or system to perform the required methods and techniques.

Aspects of the method and system described herein, such as the logic, may also be implemented as functionality programmed into any of a variety of circuitry, including programmable logic devices ("PLDs"), such as field programmable gate arrays ("FPGAs"), programmable array logic ("PAL") devices, electrically programmable logic and memory devices and standard cell-based devices, as well as application specific integrated circuits. Some other possibilities for implementing aspects include: memory devices, microcontrollers with memory (such as EEPROM), embedded microprocessors, firmware, software, etc. Furthermore, aspects may be embodied in microprocessors having software-based circuit emulation, discrete logic (sequential and combinatorial), custom devices, fuzzy (neural) logic, quantum devices, and hybrids of any of the above device types. The underlying device technologies may be provided in a variety of component types, e.g., metal-oxide semiconductor field-effect transistor ("MOSFET") technologies like complementary metal-oxide semiconductor ("CMOS"), bipolar technologies like emitter-coupled logic ("ECL"), polymer technologies (e.g., silicon-conjugated polymer and metal-conjugated polymer-metal structures), mixed analog and digital, and so on.

It should also be noted that the various logic and/or functions disclosed herein may be enabled using any number of combinations of hardware, firmware, and/or as data and/or instructions embodied in various machine-readable or computer-readable media, in terms of their behavioral, register transfer, logic component, and/or other characteristics. Computer-readable media in which such formatted data and/or instructions may be embodied include, but are not limited to, non-volatile storage media in various forms (e.g., optical, magnetic or semiconductor storage media) though again does not include transitory media.

Unless the context clearly requires otherwise, throughout the description, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. Additionally, the words "herein," "hereunder," "above," "below," and words of similar import refer to this application as a whole and not to any particular portions of this application. When the word "or" is used in reference to a list of two or more items, that word covers all of the following interpretations of the word: any of the items in the list, all of the items in the list, and any combination of the items in the list.

### Example Embodiments

Further examples of embodiments of the present invention are defined, without limitation, by the following Example Enumerated Embodiments (EEEs).
EEE 1: A method comprising: selecting a physical object that changes over time in a manner perceptible to an image capture device; scanning the selected object at a first time using the image capture device to form first image data; processing the first image data to form a first digital fingerprint of the object, wherein processing the first image data includes identifying a plurality of first points of interest in the first image data, extracting features from the first image data for at least some of the first points of interest, and storing descriptions of the extracted features as first feature vectors in the first digital fingerprint; adding to the first digital fingerprint temporal information based on when the first image data was captured, repeating the above scanning, processing and adding steps at times subsequent to the first time to capture additional image data and form additional digital fingerprints of the object based on the additional image data, so that each additional digital fingerprint includes feature vectors of the object at the time the corresponding image data was captured, and each additional digital fingerprint includes temporal information based on the time the corresponding image data was captured; assembling the first digital fingerprint and the additional digital fingerprints to form a temporal-spatial digital fingerprint of the object; and storing the temporal-spatial digital fingerprint in a datastore to characterize and subsequently identify the object.
EEE 2: The method according to EEE 1 and further comprising: selecting a point of interest that appears in at least some of the assembled digital fingerprints; analyzing changes in the feature vectors of the selected point of interest over time to form trajectory data for the selected point of interest; and adding the trajectory data to the temporal-spatial digital fingerprint of the object to further characterize the object.
EEE 3: The method of EEE 1 or EEE 2 wherein the feature vectors include data based on one or more of location, shape, size and color of the corresponding location of interest at the time the corresponding image data was captured.
EEE 4: The method of any of EEEs 1-3 wherein at least some of the feature vectors include data responsive to the corresponding image data in a region surrounding the point of interest location, so that changes in the surrounding region over time are reflected in the temporal-spatial digital fingerprint of the object.
EEE 5: The method of any of EEEs 1-4 wherein: the selected object is at least a portion of a person's face and the image data, including the first image data and the additional image data, are captured while the person is speaking a given phrase, so that the temporal-spatial digital fingerprint characterizes the person speaking the given phrase without reliance on any audio recording of the person's voice.
EEE 6: The method of any of EEEs 1-5 further comprising: for each image of the physical object that is captured at a corresponding scan time, adding the image data into a 3- or 4-dimensional data structure where one of the dimensions of the data is a temporal dimension; in the data structure, identifying localizable points of interest; characterizing each of the localizable points of interest; and adding the characterization data to the digital fingerprint of the object.
EEE 7: The method of any of EEEs 1-6 and further comprising; identifying at least one additional feature associated with the object that is not specifically related to the points of interest already identified but that varies over time while the image data of the physical object is captured; analyzing the additional feature to generate data that characterizes the additional feature over a series of discrete sample times during the period in which the image data of the physical object is captured, the characterization data comprising a series of characterization vectors responsive to the additional feature, each characterization vector including at least one characteristic value and a temporal coordinate based on the corresponding sample time of characterization vector; assembling the characterization vectors to form a digital fingerprint of the additional feature; and adding the digital fingerprint of the additional feature to the temporal-spatial digital fingerprint of the object to further characterize the object.
EEE 8: The method of EEE 7 and further comprising: comparing the digital fingerprint of the additional feature to the digital fingerprints of the object; based on the comparison, selecting at least a first sample time, and linking the digital fingerprint of the additional feature acquired at the first sample time to the digital fingerprint of the object image that was captured at the first sample time.
EEE 9: The method of EEE 7 or EEE 8 wherein the additional feature comprises an audio recording of a person speaking, and the first image data is captured concurrently with capturing the audio recording by scanning at least a portion of the person's face while the person is speaking.
EEE 10: A method comprising: videoing a person to capture digital image data of the person's face while they are speaking a first given phrase, the image data including a series of frames; processing the series of frames to form a digital fingerprint of the person, the processing step including, for at least some of the series of frames, forming an individual digital fingerprint of the frame by identifying a plurality of points of interest found in the frame, determining a characterization of each one of the points of interest, and storing the point of interest characterizations in the individual digital fingerprint of the corresponding frame; and assembling the individual digital fingerprints of the as least some of the series of frames to form the digital fingerprint of the person speaking the first given phrase.
EEE 11: The method of EEE 10 and further comprising: for each of the at least some of the series of frames, determining a temporal coordinate (time or sequence number) of the frame based on when the corresponding image data was captured; and adding the temporal coordinate to the individual digital fingerprint of the frame.
EEE 12: The method of EEE 11 and further comprising: capturing audio data responsive to the person's voice while they are speaking the first given phrase; generating a voiceprint based on the captured audio data; forming data that associates the voiceprint to the digital fingerprint of the person based on temporal matching; and adding the voiceprint and the association data to the digital fingerprint of the person's face to form a temporal-spatial digital fingerprint the person speaking the first given phrase to later identify or authenticate the person.
EEE 13: The method of EEE 12 wherein: generating the voiceprint comprises - sampling the captured audio data to determine values of at least one characteristic of the audio data for each sample; for each sample, recording the determined values of the at least one characteristic together with a corresponding temporal dimension value (time or sequence number) to form a characterization vector; and storing the characterization vectors in the voiceprint of the audio data.
EEE 14: The method of any of EEEs 10-13 further including: inducting the person saying several different phrases to form several different digital fingerprints; and forming and storing a unitary digital fingerprint of the person, based on the several different digital fingerprints; wherein each of the several different digital fingerprints comprises a temporal-spatial digital fingerprint based on image data of the person captured while speaking a corresponding one of the phrases, and temporally linked audio data recorded while the person was speaking the corresponding one of the phrases.
EEE 15: The method of any of EEEs 10-14 including: extracting features from the voiceprint that characterize each one of a plurality of points of interest found in the audio data, each audio point of interest characterization including a temporal coordinate (measurement or sequence number) and a second coordinate of the corresponding point of interest; and storing the audio point of interest characterizations in the voiceprint.
EEE 16: The method of any of EEEs 10-15 further including: recording audio data of the person's voice while they are speaking the first given phrase from the video recording; processing the audio data to form a voiceprint; extracting features from the voiceprint that characterize each one of a plurality of points of interest found in the audio data, each audio characterization including a temporal coordinate (measurement or sequence number) and a second dimension of the corresponding point of interest; linking the features extracted from the voiceprint to the digital fingerprint of the person based on the corresponding temporal coordinates for at least one particular time at which the person is speaking; and adding data based on the linking to the digital fingerprint of the person speaking.
EEE 17: A method comprising: provisioning a data store for storing and searching digital records including digital fingerprint records; storing in the data store a reference set of temporal-spatial digital fingerprints, wherein each one of the reference set of temporal-spatial digital fingerprints comprises a plurality of individual digital fingerprints of a physical object, together with information defining a temporal order among the plurality of individual digital fingerprints of the physical object; acquiring a target temporal-spatial digital fingerprint comprising a plurality of individual target digital fingerprints of a target object to be identified or authenticated, together with information describing a temporal order among the plurality of individual target digital fingerprints; querying the data store based on the target temporal-spatial digital fingerprint to find a matching reference digital fingerprint that meets at least the following two criteria: first, each of the individual digital fingerprints of a candidate matching reference digital fingerprint matches at least one of the individual target digital fingerprints within a selected probability or confidence level; and second, the temporal order information of the matching reference digital fingerprints matches the temporal order information of the target digital fingerprints, within a selected temporal tolerance level.
EEE 18: The method of EEE 17 wherein: matching an individual digital fingerprint requires matching at least one point of interest described in the digital fingerprint; and matching a point of interest includes matching both location and characterization vector of the point of interest within a predetermined confidence or tolerance.
EEE 19: The method of EEE 17 or EEE 18 wherein matching an individual digital fingerprint requires matching a cluster of points of interest in the target digital fingerprint to the reference digital fingerprint.
EEE 20: The method of any of EEEs 17-19 wherein the temporal order information comprises a corresponding timestamp for each of the individual digital fingerprints, and further comprising a step of determining the temporal sequence among the plurality of individual digital fingerprints by comparing the corresponding timestamps.
EEE 21: The method of any of EEEs 17-20 wherein the temporal order information comprises a corresponding sequence number for each of the individual digital fingerprints and further comprising a step of determining the temporal sequence among the plurality of individual digital fingerprints by comparing the corresponding sequence numbers.
EEE 22: The method of any of EEEs 17-21 further including: selecting a point of interest that appears in at least some of the individual digital fingerprints of a digital fingerprint in the reference set; analyzing the reference digital fingerprint to determine changes to the characterizations of the selected point of interest over time; and adding data to the reference digital fingerprint to describe the determined changes to the characterizations of the selected point of interest over time.
EEE 23: The method of EEE 22 further wherein analyzing the reference digital fingerprint includes: generating a world line based on the changes to the characterization of the selected point of interest over time; and adding data to the reference digital fingerprint that describes the world line.
EEE 24: The method of EEE 23 further including: analyzing the world line to form data that describes how the world line changes over time; and adding data to the digital fingerprint that describes how the world line changes over time.
EEE 25: A computer program product comprising instructions which, when executed by one or more processors, cause performance of operations which comprise the operations recited in any of EEEs 1-24.
EEE 26: One or more computer-readable media comprising instructions which, when executed by one or more processors, cause performance of operations which comprise the operations recited in any of EEEs 1-24.
EEE 27: An apparatus or system comprising one or more processors, the apparatus or system being adapted for carrying out operations which comprise the operations recited in any of EEEs 1-24.

Although certain presently preferred implementations of the invention have been specifically described herein, it will be apparent to those skilled in the art to which the invention pertains that variations and modifications of the various implementations shown and described herein may be made without departing from the spirit and scope of the invention. Accordingly, it is intended that the invention be limited only to the extent required by the applicable rules of law. Claims begin on the next page.

## Claims

1. A method comprising:
selecting a physical object that changes over time in a manner perceptible to an image capture device;
scanning the selected object at a first time using the image capture device to form first image data;
processing the first image data to form a first digital fingerprint of the object, wherein processing the first image data includes identifying a plurality of first points of interest in the first image data, extracting features from the first image data for at least some of the first points of interest, and storing descriptions of the extracted features as first feature vectors in the first digital fingerprint;
adding to the first digital fingerprint temporal information based on when the first image data was captured,
repeating the above scanning, processing and adding steps at times subsequent to the first time to capture additional image data and form additional digital fingerprints of the object based on the additional image data, so that each additional digital fingerprint includes feature vectors of the object at the time the corresponding image data was captured, and each additional digital fingerprint includes temporal information based on the time the corresponding image data was captured;
assembling the first digital fingerprint and the additional digital fingerprints to form a temporal-spatial digital fingerprint of the object; and
storing the temporal-spatial digital fingerprint in a datastore to characterize and subsequently identify the object.

2. The method according to claim 1,
wherein the method further comprises:
selecting a point of interest that appears in at least some of the assembled digital fingerprints;
analyzing changes in the feature vectors of the selected point of interest over time to form trajectory data for the selected point of interest; and
adding the trajectory data to the temporal-spatial digital fingerprint of the object to further characterize the object;
and/or
wherein the method further comprises:
for each image of the physical object that is captured at a corresponding scan time, adding the image data into a 3- or 4-dimensional data structure where one of the dimensions of the data is a temporal dimension;
in the data structure, identifying localizable points of interest;
characterizing each of the localizable points of interest; and
adding the characterization data to the digital fingerprint of the object.

3. The method of claim 1 or claim 2,
wherein the feature vectors include data based on one or more of location, shape, size and color of the corresponding location of interest at the time the corresponding image data was captured;
and/or
wherein at least some of the feature vectors include data responsive to the corresponding image data in a region surrounding the point of interest location, so that changes in the surrounding region over time are reflected in the temporal-spatial digital fingerprint of the object;
and/or
wherein the selected object is at least a portion of a person's face and the image data, including the first image data and the additional image data, are captured while the person is speaking a given phrase, so that the temporal-spatial digital fingerprint characterizes the person speaking the given phrase without reliance on any audio recording of the person's voice.

4. The method of any of claims 1-3 and further comprising;
identifying at least one additional feature associated with the object that is not specifically related to the points of interest already identified but that varies over time while the image data of the physical object is captured;
analyzing the additional feature to generate data that characterizes the additional feature over a series of discrete sample times during the period in which the image data of the physical object is captured, the characterization data comprising a series of characterization vectors responsive to the additional feature, each characterization vector including at least one characteristic value and a temporal coordinate based on the corresponding sample time of characterization vector;
assembling the characterization vectors to form a digital fingerprint of the additional feature; and
adding the digital fingerprint of the additional feature to the temporal-spatial digital fingerprint of the object to further characterize the object.

5. The method of claim 4,
wherein the method further comprises:
comparing the digital fingerprint of the additional feature to the digital fingerprints of the object;
based on the comparison, selecting at least a first sample time, and linking the digital fingerprint of the additional feature acquired at the first sample time to the digital fingerprint of the object image that was captured at the first sample time:
and/or
wherein the additional feature comprises an audio recording of a person speaking, and the first image data is captured concurrently with capturing the audio recording by scanning at least a portion of the person's face while the person is speaking.

6. A method comprising:
videoing a person to capture digital image data of the person's face while they are speaking a first given phrase, the image data including a series of frames;
processing the series of frames to form a digital fingerprint of the person, the processing step including, for at least some of the series of frames, forming an individual digital fingerprint of the frame by identifying a plurality of points of interest found in the frame, determining a characterization of each one of the points of interest, and storing the point of interest characterizations in the individual digital fingerprint of the corresponding frame; and
assembling the individual digital fingerprints of the as least some of the series of frames to form the digital fingerprint of the person speaking the first given phrase.

7. The method of claim 6 and further comprising:
for each of the at least some of the series of frames, determining a temporal coordinate (time or sequence number) of the frame based on when the corresponding image data was captured; and
adding the temporal coordinate to the individual digital fingerprint of the frame.

8. The method of claim 7,
wherein the method further comprises:
capturing audio data responsive to the person's voice while they are speaking the first given phrase;
generating a voiceprint based on the captured audio data;
forming data that associates the voiceprint to the digital fingerprint of the person based on temporal matching; and
adding the voiceprint and the association data to the digital fingerprint of the person's face to form a temporal-spatial digital fingerprint the person speaking the first given phrase to later identify or authenticate the person;
wherein generating the voiceprint in some embodiments comprises:
sampling the captured audio data to determine values of at least one characteristic of the audio data for each sample;
for each sample, recording the determined values of the at least one characteristic together with a corresponding temporal dimension value (time or sequence number) to form a characterization vector; and
storing the characterization vectors in the voiceprint of the audio data.

9. The method of any of claims 6-8,
wherein the method further includes:
inducting the person saying several different phrases to form several different digital fingerprints; and
forming and storing a unitary digital fingerprint of the person, based on the several different digital fingerprints;
wherein each of the several different digital fingerprints comprises a temporal-spatial digital fingerprint based on image data of the person captured while speaking a corresponding one of the phrases, and temporally linked audio data recorded while the person was speaking the corresponding one of the phrases;
and/or
wherein the method further includes:
extracting features from the voiceprint that characterize each one of a plurality of points of interest found in the audio data, each audio point of interest characterization including a temporal coordinate (measurement or sequence number) and a second coordinate of the corresponding point of interest; and
storing the audio point of interest characterizations in the voiceprint;
and/or
wherein the method further includes:
recording audio data of the person's voice while they are speaking the first given phrase from the video recording;
processing the audio data to form a voiceprint;
extracting features from the voiceprint that characterize each one of a plurality of points of interest found in the audio data, each audio characterization including a temporal coordinate (measurement or sequence number) and a second dimension of the corresponding point of interest;
linking the features extracted from the voiceprint to the digital fingerprint of the person based on the corresponding temporal coordinates for at least one particular time at which the person is speaking; and
adding data based on the linking to the digital fingerprint of the person speaking.

10. A method comprising:
provisioning a data store for storing and searching digital records including digital fingerprint records;
storing in the data store a reference set of temporal-spatial digital fingerprints, wherein each one of the reference set of temporal-spatial digital fingerprints comprises a plurality of individual digital fingerprints of a physical object, together with information defining a temporal order among the plurality of individual digital fingerprints of the physical object;
acquiring a target temporal-spatial digital fingerprint comprising a plurality of individual target digital fingerprints of a target object to be identified or authenticated, together with information describing a temporal order among the plurality of individual target digital fingerprints;
querying the data store based on the target temporal-spatial digital fingerprint to find a matching reference digital fingerprint that meets at least the following two criteria:
first, each of the individual digital fingerprints of a candidate matching reference digital fingerprint matches at least one of the individual target digital fingerprints within a selected probability or confidence level; and
second, the temporal order information of the matching reference digital fingerprints matches the temporal order information of the target digital fingerprints, within a selected temporal tolerance level.

11. The method of claim 10,
wherein matching an individual digital fingerprint requires matching at least one point of interest described in the digital fingerprint, and matching a point of interest includes matching both location and characterization vector of the point of interest within a predetermined confidence or tolerance;
and/or
wherein matching an individual digital fingerprint requires matching a cluster of points of interest in the target digital fingerprint to the reference digital fingerprint;
and/or
wherein the temporal order information comprises a corresponding timestamp for each of the individual digital fingerprints, and further comprising a step of determining the temporal sequence among the plurality of individual digital fingerprints by comparing the corresponding timestamps;
and/or
wherein the temporal order information comprises a corresponding sequence number for each of the individual digital fingerprints and further comprising a step of determining the temporal sequence among the plurality of individual digital fingerprints by comparing the corresponding sequence numbers.

12. The method of claim 10 or claim 11 further including:
selecting a point of interest that appears in at least some of the individual digital fingerprints of a digital fingerprint in the reference set;
analyzing the reference digital fingerprint to determine changes to the characterizations of the selected point of interest over time; and
adding data to the reference digital fingerprint to describe the determined changes to the characterizations of the selected point of interest over time.

13. The method of claim 12,
wherein analyzing the reference digital fingerprint includes:
generating a world line based on the changes to the characterization of the selected point of interest over time; and
adding data to the reference digital fingerprint that describes the world line;
and wherein the method in some embodiments further includes:
analyzing the world line to form data that describes how the world line changes over time; and
adding data to the digital fingerprint that describes how the world line changes over time.

14. An apparatus comprising one or more processors, the apparatus being adapted for carrying out operations which comprise the operations recited in any of claims 6-9.

15. One or more computer-readable media comprising instructions which, when executed by one or more processors, cause performance of operations which comprise the operations recited in any of claims 10-13.
